# EUROPEAN PATENT SPECIFICATION

(11) **EP 1 515 480 B1**
(45) Date of publication and mention of the grant of the patent: **15.10.2014**
(21) Application number: 04017104.3
(22) Date of filing: 20.07.2004
(51) Int. Cl.: H04L 12/24, H04L 12/54, H04L 12/28, H04L 12/911, H04L 12/915, H04L 12/917, H04L 12/931, H04W 28/16

(54) **Method and system for network management in a hybrid wired/wireless network**
Verfahren und System zur Netzverwaltung in einem hybriden, drahtgebundenen/drahtlosen Netz
Procédé et système pour la gestion de réseau dans un réseau hybride filaire/sans fil

(30) Priority: 09.09.2003 US 658514
(43) Date of publication of application: 16.03.2005
(73) Proprietor: Broadcom Corporation, Irvine, CA 92617 (US)
(72) Inventor: Frank, Edward H., Atherton, CA 94027 (US); Martin, Richard, Morgan Hill, CA 95037 (US)
(74) Representative: Jehle, Volker Armin

(56) References cited:
- US-A1- 2001 024 434
- US-A1- 2002 085 719
- US-A1- 2003 093 526
- J. Chan, R. De Silva, S. Zhou, A. Seneviratne: "A Framework for Mobile Wireless Networks with an Adaptive QoS Capability" Proceedings of 5th Intl. Workshop on Mobile Multimedia Communication MoMuc '98 12 October 1998 (1998-10-12), XP002577653 Berlin Retrieved from the Internet: URL:http://citeseerx.ist.psu.edu/viewdoc/d ownload?doi=10.1.1.34.514&rep=rep1&type=pd f> [retrieved on 2010-04-14]
- MORGAN Y L ET AL: "PYLON:1 an architectural framework for ad-hoc QoS interconnectivity with access domains", SYSTEM SCIENCES, 2003. PROCEEDINGS OF THE 36TH ANNUAL HAWAII INTERNATI ONAL CONFERENCE ON 6-9 JAN. 2003, PISCATAWAY, NJ, USA,IEEE, 6 January 2003 (2003-01-06), pages 309-318, XP010626761, ISBN: 978-0-7695-1874-9

## Description

### FIELD OF THE INVENTION

Embodiments of the present application relate generally to local area networks, and more particularly to a system and method for managing a hybrid wired/wireless local area network (WLAN).

US 2001/0024434 discloses Quality of Service assurances in a manner expected in other media to communications over paths that include one or more wireless links. A subnet bandwidth manager is combined at an access point to track allocations of wireless bandwidth. Furthermore, multiple priority levels for packet transmission are incorporated in a two-prong stochastic scheme. The first prong reserves bandwidth at each of the intermediate nodes in a transmission path subject to a veto by any intermediate node. The second prong modulates the transmission probability of a packet based on the previous failed attempts at transmission and the priority level of the packet. The overall result of this hybrid scheme is to not shut out users with the lowest priority, while assuring adequate bandwidth to higher priority applications.

US 2003/0093526 discloses an apparatus and method for providing Quality of Service (QoS) signaling for an IEEE 802.11e Medium Access Control (MAC) layer in a wireless local area network (WLAN, wherein the WLAN is capable of providing three types of QoS signaling to and from wireless QoS stations in the WLAN. Upstream QoS signaling establishes a QoS stream that originates from a source wireless QoS station in the WLAN. Downstream QoS signaling establishes a QoS stream that is sent to a destination wireless QoS station in the WLAN. Sidestream QoS signaling establishes a QoS stream between a source wireless QoS station and a destination wireless QoS station in the same QoS basic service set of the WLAN. Document XP002577653 "A Framework for Mobile Wireless Networks with an Adaptive QoS capability" by J. Chan et al. introduces the placement of proxy modules in a heterogeneous network. The proxies enable seamless roaming for a mobile client while maintaining the QoS for the running session by the proxies, which reserve resources in advance for potential roaming clients.

Document XP010626761 "PYLON: 1 an architectural framework for ad-hoc QoS interconnectivity with access domains" by Y.L. Morgan et al. proposes a hierarchical QoS interaction model between an ad-hoc and a fixed access network, which does however not consider an interaction between the gateways of the fixed access network.

US200210085719 discloses a centrally managed WLAN which includes WLAN subnets. The central manager forces access devices to roam between the access points of the different WLAN subnets based on load balancing reasons in order to maintain the QoS of certain flows. The roaming is taught between access points of a WLAN and does not give any hint to network management for QoS based interaction between different WLANs.

### BACKGROUND OF THE INVENTION

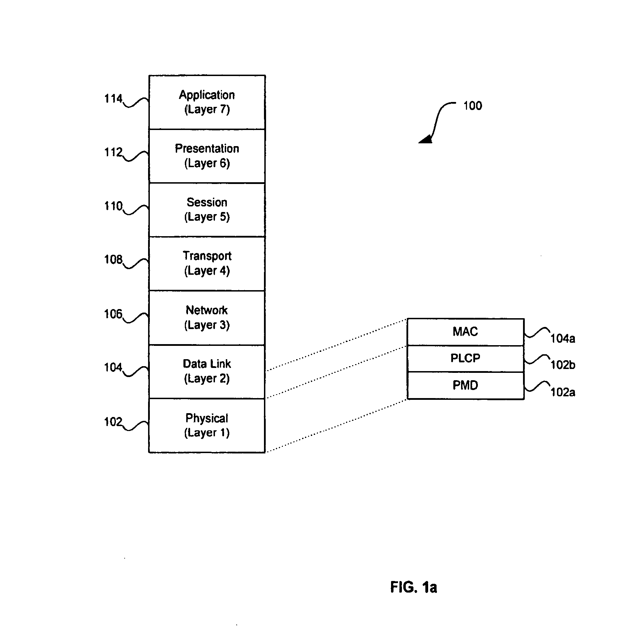

The Open Systems Interconnection (OSI) model promulgated by the International standards organization (ISO) was developed to establish standardization for linking heterogeneous computer and communication systems. The OSI model describes the flow of information from a software application of a first computer system to a software application of a second computer system through a network medium. FIG. 1a is a block diagram 100 of the OSI model. Referring to FIG. 1a, the OSI model has seven distinct functional layers including layer 7, an application layer 114; layer 6, a presentation layer 112; layer 5, a session layer 110; layer 4, a transport layer 108, layer 3, a network layer 106; layer 2: a data link layer 104; and layer 1, a physical layer 102. The physical layer 102 may further include a physical layer convergence procedure (PLCP) sublayer 102b and a physical media dependent sublayer 102a. The data link layer 104 may also include a Medium access control (MAC) layer 104a.

In general, each OSI layer describes certain tasks which are necessary for facilitating the transfer of information through interfacing layers and ultimately through the network. Notwithstanding, the OSI model does not describe any particular implementation of the various layers. OSI layers 1 to 4 generally handle network control and data transmission and reception, generally referred to as end-to-end network services. Layers 5 to 7 handle application issues, generally referred to as application services. Specific functions of each layer may vary depending on factors such as protocol and/or interface requirements or specifications that are necessary for implementation of a particular layer. For example, the Ethernet protocol may provide collision detection and carrier sensing in the physical layer. Layer 1, the physical layer 102, is responsible for handling all electrical, optical, opto-electrical and mechanical requirements for interfacing to the communication media. Notably, the physical layer 102 may facilitate the transfer of electrical signals representing an information bitstream. The physical layer 102 may also provide services such as, encoding, decoding, synchronization, clock data recovery, and transmission and reception of bit streams.

The PLCP layer 102b may be configured to adapt and map services provided by the physical layer 102 to the functions provided by the device specific PMD sublayer 102a. Specifically, the PLCP layer 102b may be adapted to map PHY sublayer service data units (PDSUs) into a suitable packet and/or framing format necessary for providing communication services between two or more entities communicating via the physical medium. The PMD layer 102a specifies the actual methodology and/or protocols which may be used for receiving and transmitting via the physical medium. The MAC sublayer 104a may be adapted to provide, for example, any necessary drivers which may be utilized to access the functions and services provided by the PLCP sublayer 102b. Accordingly, higher layer services may be adapted to utilize the services provided by the MAC sublayer 104a with little or no dependence on the PMD sublayer 102a.

802.11 is a suite of specifications promulgated by the Institute of Electrical and Electronics Engineers (IEEE), which provide communication standards for the MAC and physical (PHY) layer of the OSI model. The 801.11 standard also provides communication standards for wired and wireless local area networks (WLANs). More specifically, the 802.11 standard specifies five (5) types of physical layers for WLANs. These include, frequency hopping spread spectrum (FHSS), direct sequence spread spectrum (DSSS), infrared (IR) communication, high rate direct sequence spread spectrum spread spectrum (HR-DSS) and orthogonal frequency division multiplexing (OFDM). The 802.11 standard also provides a PLCP frame format for each of the specified PHY layers.

Over the past decade, demands for higher data rates to support applications such as streaming audio and streaming video, have seen Ethernet speeds being increased from about 1-2 megabit per second (Mbps), to 10 Mbps, to 100 Mbps, to 1 gigabit per second (Gbps) to 10 Gbps. Currently, there are a number of standards in the suite of specifications, namely 802.11b, 802.11a and 802.11g which have been adapted to facilitate the demands for increased data rates. The 802.11g standard for example, provides a maximum data rate of about 54 Mbps at a transmitter/receiver range of 19 meters (m) in a frequency range of 2.4 GHz to 2.4835 GHz. The 802.11b standard for example, provides a maximum data rate of about 11 Mbps at a transmitter/receiver range of 57 meters (m) in a frequency range of 2.4 GHz to 2.4835 GHz. Finally, the 802.11a standard for example, may be adapted to provide a maximum data rate of about 54 Mbps at a transmitter/receiver range of 12 meters (m) in a 300 MHz segmented bandwidth ranging from 5.150 GHz to 5.350 GHz and from 5.725 GHz to 5.825 GHz.

The 802.11 standard forms the basis of the other standards in the suite of specifications, and the 802.11b, 802.11a and 802.11g standards provide various enhancements and new features to their predecessor standards. Notwithstanding, there are certain elementary building blocks that are common to all the standards in the suite of specifications. For example, all the standards in the suite of specifications utilize the Ethernet protocol and utilize carrier sense multiple access with collision avoidance (CSMA/CA).

CSMA/CA utilizes a simple negotiation scheme to permit access to a communication medium. If a transmitting entity wishes to transmit information to a receiving entity, the transmitting entity may sense the communication medium for communication traffic. In a case where the communication medium is busy, the transmitting entity may desist from making a transmission and attempt transmission at a subsequent time. In a case where the communication transmission is not busy, then the transmitting entity may send information over the communication medium. Notwithstanding, there may be a case where two or more transmission entities sense that the communication medium is not busy and attempt transmission at the same instant. To avoid collisions and retransmissions, a CSMA/OA or ready to send (RTS) and clear to send (CTS) messaging scheme may be employed, for example. Accordingly, whenever a transmitting device senses that the communication medium is not busy, then the transmitting device may send a ready to send message to one or more receiving device. Subsequent to the receipt of the ready to send message, the receiving device may send a clear to send message. Upon receipt of the clear to send message by the transmitting device, the transmitting device may initiate transfer of data to the receiving device. Upon receiving packets or frames from the transmitting device, the receiving device may acknowledge the received frames.

The 802.11b standard, commonly called Wi-Fi, which represents wireless fidelity, is backward compatible with its predecessor standard 802.11. Although 802.11 utilizes one of two modulation formats including direct sequence spread spectrum (DSS) using differential binary phase shift keying and frequency hopping spread spectrum (11-bit Barker sequence), 802.11b utilizes a higher data rate form of DSS called complementary code keying (CCK). CCK permits higher data rate and particularly less susceptible to interference effects such as multipath-propagation interference, the PSK.

802.11a utilizes orthogonal frequency-division multiplexing (OFDM) modulation/encoding scheme, which provides a maximum data rate 54 Mbps. Orthogonal frequency-division multiplexing is a digital modulation technique which splits a signal into several narrowband channels, with each channel having a different frequency. Each narrowband channel is arranged so as to minimize the effects of crosstalk between the channels and symbols in the data stream.

Since equipment designed to provide support for 802.11a operates at frequencies in the ranges 5.150 GHz to 5.350 GHz and from 5.725 GHz to 5.825 GHz, 802.11a equipment will not interoperate with equipment designed to operate with the 802.11b standard which defines operation in the 2.4 to 2.4835 GHz frequency band. One major drawback is that companies that have invested in 802.11b equipment and infrastructure may not readily upgrade their network without significant expenditure.

The 802.11 g standard was developed as an extension to 802.11b standard. The 802.11g standard may utilize a similar OFDM modulation scheme as the 802.11a standard and delivers speeds comparable with the 802.11a standard. Since 802.11g compatible equipment operates in the same portion of the electromagnetic spectrum as 802.11b compatible equipment, 802.11g is backwards compatible with existing 802.11b WLAN infrastructures. Due to backward compatibility of 802.11g with 802.11b, it would be desirable to have an 802.11b compliant radio card capable of interfacing directly with an 802.11g compliant access point and also an 802.11g compliant radio card capable of interfacing directly with an 802.11b compliant access point.

Furthermore although 802.11g compatible equipment operates in the 2.4 GHz to 2.4835 GHz frequency range, a typical transmitted signal utilizes a bandwidth of approximately 22 MHz, about a third or 30% of the total allocated bandwidth. This limits the number of non-overlapping channels utilized by an 802.11g access point to three (3). A similar scenario exists with 802.11b. Accordingly, many of the channel assignment and frequency reuse schemes associated with the 802.11b standard may be inherent in the 802.11 g.

RF interference may pose additional operational problems with 802.11b and 802.11g equipment designed to operate in the 2.4 GHz portion of the electromagnetic spectrum. The 2.4 GHz portion of the spectrum is an unlicensed region which has been utilized for some time and is crowded with potential interfering devices. Some of these devices include cordless telephone, microwave ovens, intercom systems and baby monitors. Other potential interfering devices may be Bluetooth devices. Accordingly, interference poses interference problems with the 802.11b and 802.11g standards.

802.11a compatible equipment utilizes eight non-overlapping channels, as compared to three non-overlapping channels utilized by 802.11b. Accordingly, 802.11a access points may be deployed in a more dense manner than, for example 802.11b compatible equipment. For example, up to twelve access points each having a different assigned frequency may be deployed in a given area without causing co-channel interference. Consequently, 802.11a may be particularly useful in overcoming some of the problems associated with channel assignment, especially in areas that may have a dense user population and where increased throughput may be critical. Notwithstanding, the higher operating frequency of 802.11a causes more attenuation resulting in a shorter operating range at a given data rate. This may significantly increase deployment cost since a larger number of access points are required to service a given service area.

In hybrid wired/wireless network systems that may utilize one or more protocols in the 802.11 suite of protocols, the mobility of access devices throughout the network may pose additional challenges for conventional switches and switching equipment. Since access devices are continuously changing their point of access to the network, conventional switches may not have the capability to control other network devices and/or entities to provide a seamless and efficient communication throughout the network. In order to satisfy subscriber demands, certain quality and minimum service standards have to be maintained by a network system. For example, subscribers may expect to be connected at least 99.9% of the time when they attempt or initiate a connection. Additionally, subscribers may be willing to accept a minimal delay of a few milliseconds whenever they may be engaged in a voice call. However, operating outside the realm of acceptable standards may significantly affect customer satisfaction and loyalty. Notwithstanding, maintaining acceptable standards may be challenging in a continuously changing network. Moreover, particularly in network systems that may handle large volumes of access device traffic, conventional switching equipment may not have the necessary resources to effectively ensure and maintain acceptable standards.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Aspects of the invention may provide a system and method for network management in a hybrid wired/wireless local area network according to the independent claims.

Aspects of the invention may provide a system for network management in a hybrid wired/wireless local area network. The system for network management may include at least one receiver, which may be adapted to receive from a first access point and/or a first switch, a first messaging protocol message containing quality of service (QoS) information. At least one controller may be adapted to determine at least a minimum QoS level for operation of the first switch, the first access point, a second access point, and/or a second switch in response to the first messaging protocol message. One of the controllers may be adapted to distribute QoS information corresponding to the determined minimum QoS level to the first switch, the first access point, the second access point and/or the second switch, using a second messaging protocol message.

The controller may further be adapted to provide access to one or more access devices based on the distributed QoS information. A queue may be adapted to queue traffic associated with one or more access devices by the controller in order to maintain a minimum QoS level. The controller may be further adapted to prioritize the traffic associated with any of the access devices to ensure that the determined minimum QoS level may be maintained. The controller may be further adapted to schedule access by one or more of the access devices to either of he first and second access points. The controller may be further adapted to distribute QoS information to at least a portion of the hybrid wired/wireless local area network. At least one of the controllers may be adapted to allocate bandwidth to maintain at least a minimum QoS level. The allocation may be dynamically achieved. One or more of the controllers may be adapted to balance a load on the first switch, the first access point, the second access point and/or the second switch to maintain the minimum QoS level.

The first and second messaging protocol messages may be one or more of an access point status message, access point configuration message, a switch status message, a switch configuration message, a client status message and a device discovery message. The at least one controller may be one or more of a bandwidth management controller, a quality of service controller, a load balancing controller a session controller, a processor and a network management controller.

Advantageously, the method further comprises providing access to at least one of a plurality access devices based on said distributed QoS information.

Advantageously, the method further comprises queuing traffic associated with at least one of said plurality of access devices to maintain said determined at least a minimum QoS level.

Advantageously, the method further comprises prioritizing said traffic associated with at least one of said plurality of access devices to maintain said determined at least a minimum QoS level.

Advantageously, said distributing further comprises distributing said QoS information to at least a portion of the hybrid wired/wireless local area network.

Advantageously, the method further comprises allocating bandwidth to maintain said at least a minimum QoS level.

Advantageously, the method further comprises balancing a load on at least one of said first switch, said first access point, said second access point and said second switch to maintain said at least a minimum QoS level.

Advantageously, each of said first and second messaging protocol messages comprises at least one message selected from the group consisting of an access point status message, access point configuration message, a switch status message, a switch configuration message, a client status message and a device discovery message.

According to an aspect of the invention, a machine-readable storage is provided in an independent claim.

Advantageously, the machine-readable storage further comprises code for providing access to at least one of a plurality access devices based on said distributed QoS information.

Advantageously, the machine-readable storage further comprises code for queuing traffic associated with at least one of said plurality of access devices to maintain said determined at least a minimum QoS level.

Advantageously, the machine-readable storage further comprises code for prioritizing said traffic associated with at least one of said plurality of access devices to maintain said determined at least a minimum QoS level.

Advantageously, said distributing further comprises code for distributing said QoS information to at least a portion of the hybrid wired/wireless local area network.

Advantageously, the machine-readable storage further comprises code for allocating bandwidth to maintain said at least a minimum QoS level.

Advantageously, the machine-readable storage further comprises code for balancing a load on at least one of said first switch, said first access point, said second access point and said second switch to maintain said at least a minimum QoS level.

Advantageously, each of said first and second messaging protocol messages comprises at least one message selected from the group consisting of an access point status message, access point configuration message, a switch status message, a switch configuration message, a client status message and a device discovery message.

Advantageously, said at least one controller is further adapted to provide access to at least one of a plurality access devices based on said distributed QoS information.

Advantageously, said at least one controller is further adapted to queue traffic associated with at least one of said plurality of access devices to maintain said determined at least a minimum QoS level.

Advantageously, said at least one controller is further adapted to prioritize said traffic associated with at least one of said plurality of access devices to maintain said determined at least a minimum QoS level.

Advantageously, said at least one controller is further adapted to distribute said QoS information to at least a portion of the hybrid wired/wireless local area network.

Advantageously, said at least one controller is further adapted to allocate bandwidth to maintain said at least a minimum QoS level.

Advantageously, said at least one controller is further adapted to balance a load on at least one of said first switch, said first access point, said second access point and said second switch to maintain said at least a minimum QoS level.

Advantageously, each of said first and second messaging protocol messages comprises at least one message selected from the group consisting of an access point status message, access point configuration message, a switch status message, a switch configuration message, a client status message and a device discovery message.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1a is a block diagram of the OSI model.

FIG. 1b is a block diagram illustrating a general PLCP frame as defined by 802.11.

FIG. 1c is a block diagram illustrating a PLCP frame utilized by frequency hopping spread spectrum as defined by 802.11.

FIG. 1d is a block diagram illustrating a PLCP frame for direct sequence spread spectrum and high rate direct sequence spread spectrum as defined by 802.11.

FIG. 1e is a block diagram illustrating a PLCP frame for orthogonal frequency division multiplexing as defined by 802.11.

FIG. 2 is a block diagram of an exemplary system for network management in a wireless local area network in accordance with an embodiment of the invention.

FIG. 3 is a block diagram of an exemplary Enterprise Wireless LAN having switches serving as the edge managers in accordance with an embodiment of the invention.

FIG. 4 is a block diagram of an exemplary switch as illustrated in FIG. 2 and FIG. 3 in accordance with an embodiment of the invention.

FIG. 5 is a block diagram of an exemplary switching system for bandwidth management in a wireless local area network in accordance with an embodiment of the invention.

FIG. 6 is a block diagram of an exemplary session control process with respect to FIG. 5 that may be utilized by the switching system for bandwidth management in accordance with an embodiment of the invention.

FIG. 7 is a block diagram of an exemplary load balancing process with respect to FIG. 5 that may be utilized by the switching system for bandwidth management in accordance with an embodiment of the invention.

FIG. 8 is a block diagram of an exemplary QoS enabling process with respect to FIG. 5 that may be utilized by the switching system for bandwidth management in accordance with an embodiment of the invention.

FIG. 9a is a flowchart of exemplary steps for a QoS enabling process that may be utilized by the switching system for network management in accordance with an embodiment of the invention.

FIG. 9b is a flowchart of exemplary steps for a QoS enabling process that may be utilized by the switching system for network management in accordance with an embodiment of the invention.

### DETAILED DESCRIPTION OF THE INVENTION

Aspects of the invention may provide a system and method for network management in a hybrid wired/wireless local area network. A method for network management in a hybrid wired/wireless local area network may include receiving from a first access point and/or a first switch, a first messaging protocol message containing quality of service (QoS) information. Responsive to the first messaging protocol message, at least a minimum QoS level for operation of the first switch, the first access point, a second access point and/or a second switch may be determined. QoS information corresponding to at least the minimum QoS level may be distributed to the first switch, the first access point, the second access point and the second switch, using a second messaging protocol message. QoS information may be distributed to at least a portion of the hybrid wired/wireless local area network.

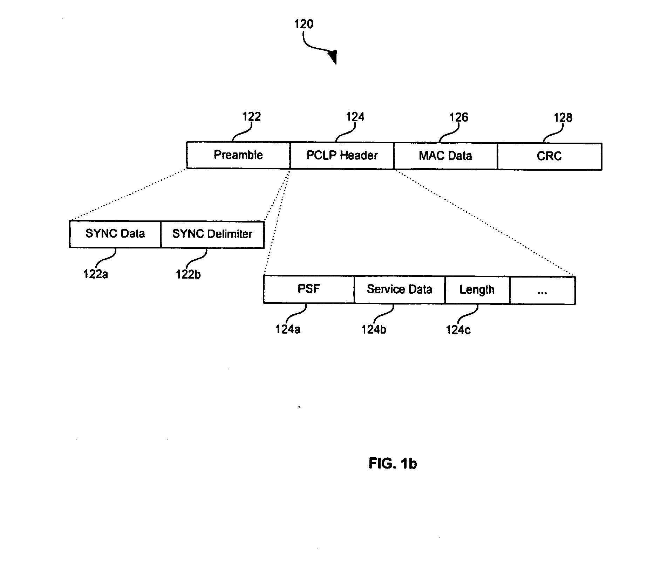

FIG. 1b is a block diagram 120 illustrating a general PLCP frame as defined by 802.11. Referring to FIG. 1b, there is shown preamble 122, PLCP header 124, MAC data 126, and CRC 128. Preamble 122 may include synchronization (SYNC) data 122a and synchronization delimiter 122b. The PLCP header 124 may include, for example PLCP signal field (PSF) 124a, service data 124b, length 124c and other fields. The preamble 122 may be dependent on the PHY. The SYNC data 122a may include a unique bit stream that may be adapted to signal timing parameters such as the start of a frame. The SYNC data 122a is used for bit synchronization and demodulation. The SYNC delimiter 122b provides frame timing information and may be adapted to delimit the end of synchronization information. The PLCP header 124 may be adapted to contain information used for decoding the frame. For example, the PSF 124a may be adapted to include communication data rate information. The service data 124b is generally reserved, but may be utilized to provide application specific functionality. The length 124c may be adapted to indicate the length of the MAC data 126. In this regard, the length 124c may be expressed in terms of the time required to transmit the MAC data 126.

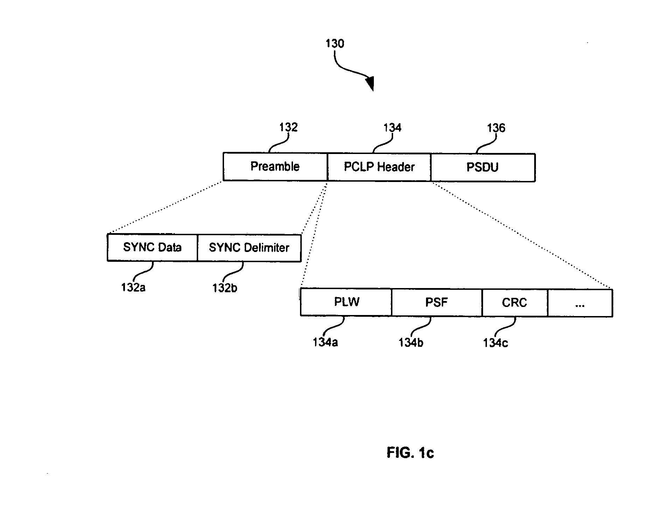

FIG. 1c is a block diagram 130 illustrating a PLCP frame utilized by frequency hopping spread spectrum as defined by 802.11. Referring to FIG. 1c, there is shown a SYNC data 132, PLCP header 134 and PSDU 136. The PLCP header 134 may include, for example, PSDU length word (PLW) 134a, PLCP signaling field (PSF) 134b, header error check field or CRC 134c and other fields. The PLW 134a may specify the number of octets contained in the PSDU 136. The PSF 134 be may be 4-bits in length and may be used to denote the communication data rate.

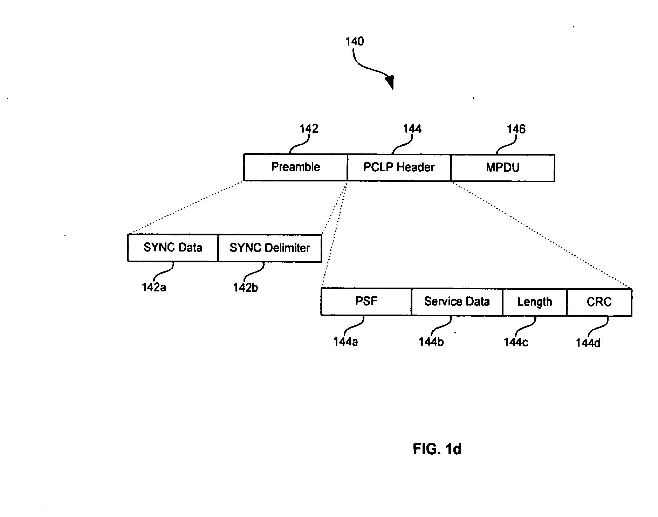

FIG. 1d is a block diagram 140 illustrating a PLCP frame for direct sequence spread spectrum and high rate direct sequence spread spectrum (HR-DSS) as defined by 802.11. Referring to FIG. 1d, there is shown preamble 142, PLCP header 144 and MPDU 146. Preamble 142 may include synchronization (SYNC) data 142a and synchronization delimiter 142b. The PLCP header 144 may include PLCP signal field (PSF) 144a, service data 144b, length 144c, and CRC field 144d. The SYNC data 142a may be 128 bits as compared to 8 bits for SYNC data 132a for frequency hopping spread spectrum. The CRC 144d is 16 bits, which is similar to CRC 134c for frequency hopping spread spectrum.

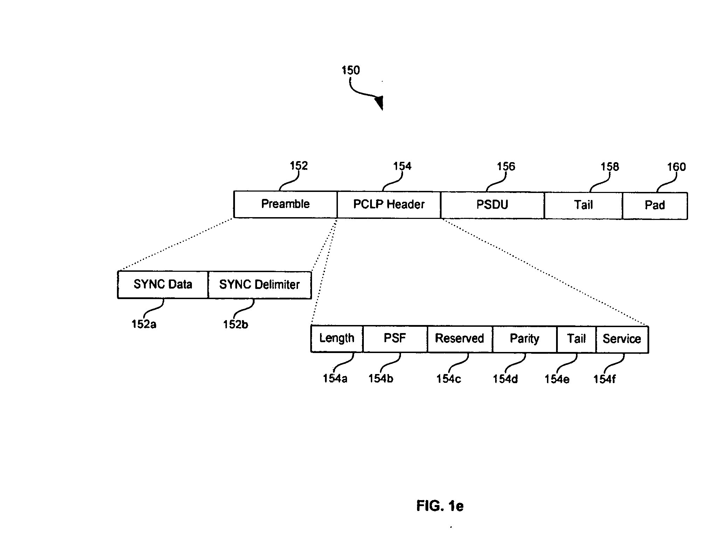

FIG. 1e is a block diagram 150 illustrating a PLCP frame for orthogonal frequency division multiplexing as defined by 802.11. Referring to FIG. 1e, there is shown preamble 152, PLCP header 154 and PSDU 156, tail 158 and pad 160. Preamble 152 may include synchronization (SYNC) data 152a and synchronization delimiter 152b. The PLCP header 154 may include length 154a, PLCP signal field (PSF) 154b, reserved field 154c, parity 154d, tail 154e and service 154f. The length 154a is a 12-bit field that may be adapted to indicate the length of the frame. The PSF 154b is a 4-bit field that may indicate a modulation scheme utilized and its associated coding rate of the PSDU. For example, the specification utilizes binary 1011 to represent 6 Mbps, 1111 to represent 9 Mbps, 1010 to represent 12 Mbps, 1110 to represent 18 Mbps, 1001 to represent 24 Mbps, 1011 to represent 36 Mbps, 1000 to represent 48 Mbps and finally, 1100 to represent the maximum standardized rate if 54 Mbps. The reserved field 154c is a 1 bit field that is reserved for future use and may be adapted for application specific use. The parity field 154d may indicate odd or even parity. The tail field 154e is a 6-bit field. The service field 154f is a 16-bit field that may be adapted to indicate the type of service.

In a typical wireless local area network, especially as access devices become mobile throughout the network, channel capacity may be rapidly time varying. For example, when the distance from an access device to an access point increases or decreases due to mobility, the channel capacity and ultimately the channel throughput may change due to continuous association and dis-association of access devices with access points. In accordance with an embodiment of the invention, a switch is provided to facilitate network management between one or more of a plurality of access devices and/or access points, and/or other switches. The switch may utilize a messaging protocol, which may be adapted to facilitate tasks such as quality of service (QoS) control and management, switch filter transfer, bandwidth management, session control and management and/or and load balancing.

Referring to the task of network management, in a hybrid wired/wireless LAN in which network capacity may be rapidly changing over time due to the mobility of access devices, the switch, in accordance with an aspect of the invention, may be configured to perform various network management tasks for a wired and/or a wireless portion of the network. The task of network management may involve performing one or more activities including, but not limited to, QoS management, bandwidth management including tracking bandwidth usage and allocating and de-allocating bandwidth to meet user and/or client demands. The management of these activities may be directly or indirectly related to providing mobility and operability throughout a wired or wireless LAN, or a hybrid combination thereof.

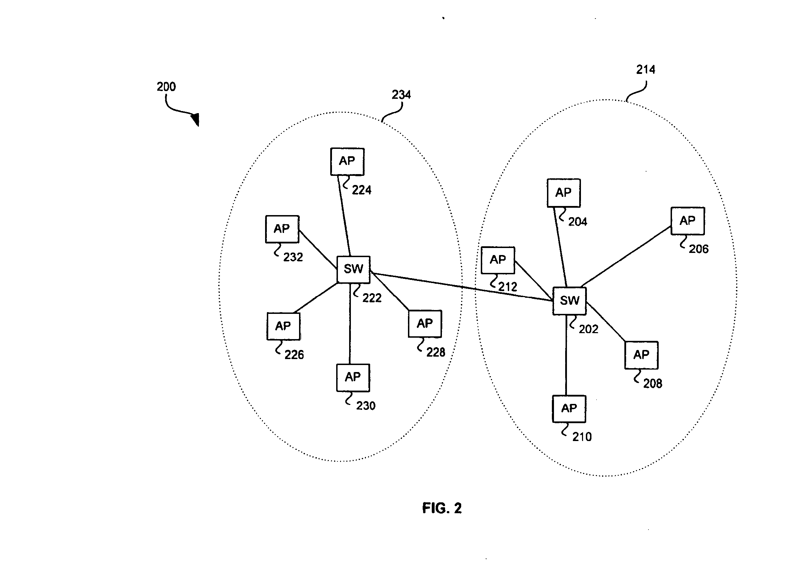

FIG. 2 is a block diagram of an exemplary system for network management in a wireless local area network in accordance with an embodiment of the invention. Referring to FIG. 2, there is illustrated a first networking domain 214 and a second networking domain 234. The first networking domain 214 may include a switch 202, and access points 204, 206, 208, 210, 212. Each of access points 204, 206, 208, 210, 212 may be coupled to the switch 202. The second networking domain 234 may include a switch 222, and access points 224, 226, 228, 230, 232. Each of access points 224, 226, 208, 230, 232 may be coupled to the switch 222. Switch 222 may be coupled to switch 202 through any one or more of a wired and a wireless medium. Although not shown, at least some of the access points in any one of the networking domains 214, 234 may be coupled to each other. Notwithstanding, a plurality of actual and/or virtual channels may be provided to facilitate communication with the access points and switches. Although the networking domains 214 and 234 are illustrated as separate networking entities, the invention is not so limited. Accordingly, the networking domain 214, 234 may be part of a single networking entity, but may represent separate security domains within the single networking entity.

In operation, any one or more of the switches 202, 222 may be adapted to send network management related information and parameters to any one or more of the access points in any one or more of the networking domains 214, 234. In one embodiment of the invention, for example, switch 202 may be adapted to communicate QoS management information to access point 206. Similarly, switch 202 may be adapted to send network management related information to any one or more of access points 204, 208, 210, 214. Similarly, switch 222 may be adapted to communicate network management related information to any one or more of access points 224, 226, 228, 230, 232. The QoS information and/or network management related information may be used by an access point to efficiently allocate, distribute and/or de-allocate system resources for associating and/or dissociating access devices.

In another aspect of the invention, the switches 202, 222 may be adapted to provide, for example, certain QoS management activities to the access points using for example a messaging protocol. Accordingly, some activities such as bandwidth policing, bandwidth management, load balancing, roaming and handover may be handled by coordinating one or more switches and one or more access points utilizing, for example, a messaging protocol. Notwithstanding, a switch for example, switch 222, may be configured to establish rules that may be adapted by the access points 224, 226, 228, 230, 232 in carrying out these activities. The rules may be propagated from the switches 222, 202 to the access points 204, 208, 210, 214, 224, 226, 228, 230, 232 using, for example, the messaging protocol. Prioritization and processing, for example, may be based on acceptable levels of latency and bandwidth availability. For example, an IP telephone call may be assigned highest queuing and processing priority in order to minimize latency. Policing, for example, may include performing activities which may limit and control the usage of available bandwidth by a particular access device or a type of access device. These and other tasks may be controlled by the switch using the messaging protocol. Although activities such as policing and QoS management may be conducted independently of the bandwidth management, in accordance with an aspect of the invention, bandwidth management related information may be utilized for network and QoS management.

In operation, any one or more of the access points in any one or more of the networking domains may be adapted to acquire various QoS related information and parameters and communicate the QoS related information to one or more of the switches 202, 222. In one embodiment of the invention, for example, access point 206 may be adapted to acquire various QoS related information and communicate the acquired information back to the switch 202. Similarly, any one or more of access points 204, 208, 210, 214 may acquire various bandwidth related information and parameters and communicate the acquired information to switch 202. In another aspect of the invention, any one or more of access points 224, 226, 228, 230, 232 may acquire various QoS related information and parameters and communicate the acquired information to the switch 222.

In another embodiment of the invention, any one or more of access points 224, 226, 228, 230, 232 may acquire various QoS related information and parameters and communicate the acquired information to the switch 202 through switch 222. This may be particularly useful in, for example, a roaming scenario or handoff scenario. In both the roaming and handoff scenarios where a particular access device is roaming or being handed off from networking domain 234 to networking domain 214, it may be advantageous to acquire bandwidth related information pertaining to networking domain 214 before permitting an access device to acquire service from networking domain 214. In this case, switch 222 may initiate a query requesting bandwidth related information from switch 202. Consequently, switch 214 may request bandwidth related information from any one or more of access points 204, 206, 208, 210, 212. Once switch 202 receives the bandwidth related information from these access points, it may communicate the information to the switch 222. Accordingly, the switch 222 may decide whether to handoff or permit roaming depending on the QoS and/or bandwidth related information received from the switch 202.

Based on, for example, QoS related information received from one or more access devices or switches, a switch may be adapted to force an access device to roam. For example, in a case where the switch determines that there may be insufficient bandwidth or channel capacity to provide a minimal acceptable QoS, then the switch may be adapted to dynamically force existing and/or new incoming access devices to roam. In one aspect of the invention, a list of devices that have been forced to roam may be maintained. Accordingly, if a switch determines that there is sufficient channel capacity available to provide a minimal acceptable QoS, then the switch may be adapted to signal or notify devices on the list to reattempt establishment of service and permit access to the service provided by the network. In this regard, any one or more of the switches 202, 222 may be adapted to determine the total available bandwidth for any one or more of a plurality of access points and/or switches. Accordingly, the switches 202 and/or 222 may provide channel/frequency management and quality of service QoS management in order to optimize bandwidth utilization for a plurality of access devices.

In another embodiment of the invention, based on various QoS network management related information, an access prioritization scheme may be adapted and enforced by, for example, any one or more of the switches 202, 222. The prioritization scheme may include, establishing a priority for all network traffic, honoring prioritized traffic from all clients, and/or honoring prioritized traffic from some select clients such as trusted clients. In another aspect of the invention, the switches 202, 222 may be adapted to provide certain QoS management activities to the access points. Accordingly, some activities such as bandwidth policing, bandwidth management, packet prioritization and processing, and service type queuing may be handled by an access point. Notwithstanding, a switch may be adapted to establish rules that may be utilized by the access points in carrying out these activities in order to maintain at least minimal acceptable level of service. Prioritization and processing, for example, may be based on, for example, acceptable levels of latency and bandwidth availability. For example, an IP telephone call may be assigned highest queuing and processing priority in order to minimize latency. Policing, for example, may include tasks which limit and control the usage of available bandwidth by a particular access device or a type of access device. Accordingly, bandwidth may be fairly distributed amongst access devices to ensure at least a minimal acceptable level of service.

In accordance with an aspect of the invention, the switch may utilize the messaging protocol (MP) to provide enhanced communication services to one or more of a plurality of access devices or mobile stations in, for example, an enterprise Wireless LAN (WLAN). The enhanced communication, in addition to ordinary WLAN device communication such as authentication, authorization, key exchanges, beacon broadcast, etc., may provide additional network management features not currently provided by a WLAN to its clients. These additional features may include, but are not limited to, quality of service management, bandwidth management, access control, load balancing and network management. In addition to switches, other enterprise WLAN devices that may utilize messaging protocol message transactions may include but are not limited to, wireless access points, enterprise switches and wireless stations. These devices may be messaging protocol enabled in certain instances, to take advantage of the new network management features.

In accordance with an aspect of the invention, an exemplary WLAN Architecture may be provided. In the enterprise Wireless LAN environment, the wireless devices may be located at the edge of the network. The wireless devices may be connected or coupled to the enterprise network via the one or more access points, which in turn may be the edge devices of, for example, a wired LAN. The access points may be connected to the LAN via switches. These switches, which may be called wireless LAN switches, and in certain instances, may not only perform Layer 2 switching, but may be adapted to function as a wireless edge managers. They may also provide additional network management functionalities such as bandwidth management, access control, firewall functions, traffic privacy and quality of service management and load balancing.

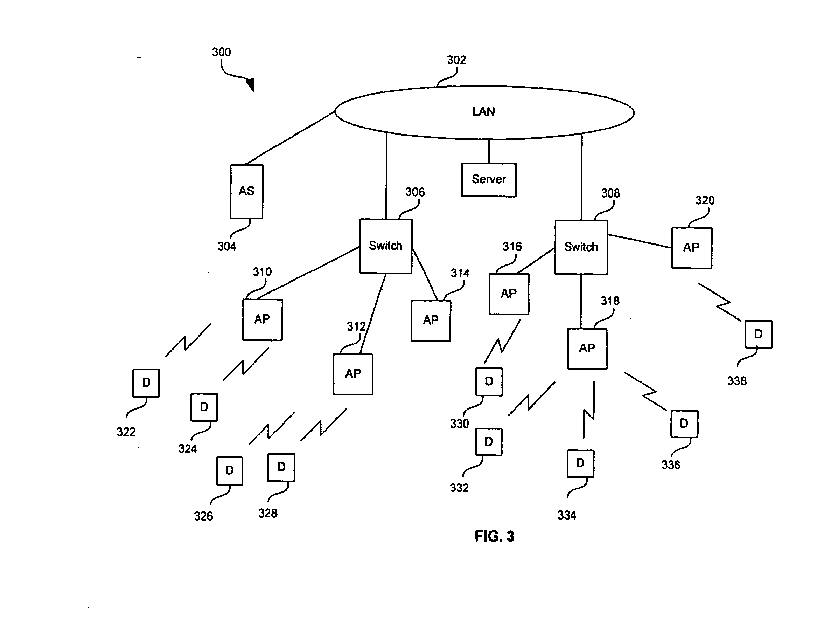

FIG. 3 is a block diagram 300 of an exemplary Enterprise Wireless LAN having switches serving as the edge managers in accordance with an embodiment of the invention. Referring to FIG. 3, there is shown, a local area network (LAN) 302, authentication server 304, switches 306, 308, access points (APs) 310, 312, 314, 316, 318, 320 and access devices 322, 324, 326, 328, 330, 332, 334, 336, 338. It should be recognized that the invention is not limited to and Enterprise WLAN. The invention may be applicable to a wired LAN, a wireless LAN and any combination thereof.

Wireless transmission or communication between the access devices or clients, and the access points may be secure. This may be also be true for the wired connections between any of the access points 310, 312, 314, 316, 318, 320 and the switches 306, 308. The switches 306, 308 and access points 310, 312, 314, 316, 318, 320 may be adapted to communicate using, for example, an Ethernet protocol. From the switch's perspective, the switch may be switching regular layer 2 frames. However, within the switch, knowledge of a WLAN and its management intelligence may reside primarily in software. Notwithstanding, the invention is not limited in this regard.

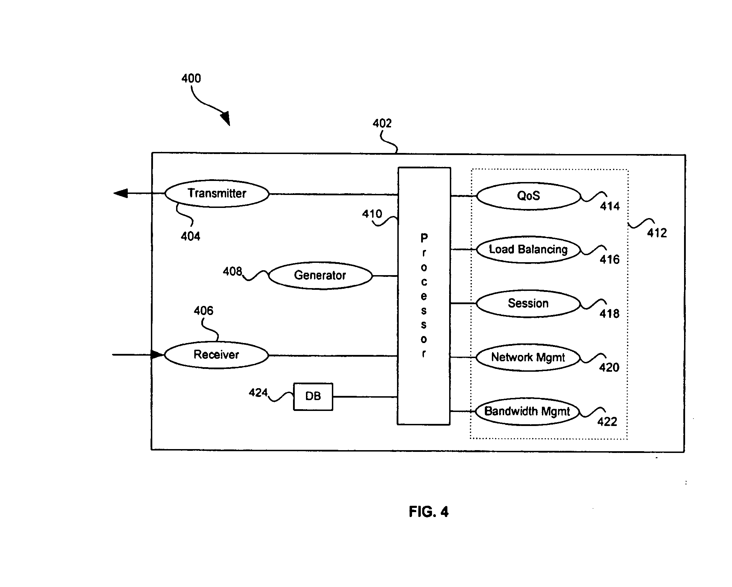

FIG. 4 is a block diagram 400 of an exemplary switch 402 as illustrated in FIG. 2 and FIG. 3 in accordance with an embodiment of the invention. Referring to FIG. 4, switch 402 may include a processor 410, transmitter 404, receiver 406, generator 408 and controller 412. The controller 412 may include QoS controller 414, bandwidth controller 422, load balancing controller 416, session controller 418 and network management controller 420. The transmitter 404, receiver 406, generator 408 and the components of the controller 412, namely QoS controller 414, load balancing controller 416, session controller 418 and network management controller 420, may be variously coupled to processor 410.

The components of switch 402 may include suitable circuitry and/or software capable of implementing the various network management functions, including but not limited to, QoS management, bandwidth management, load balancing, session management and control. Notwithstanding, although the components of the switch 402 are individually shown, the invention is not limited in this regard. For example, with suitable software and/or logic, the generator function 408 may be implemented solely by the processor 422. Similarly, any one or more of the bandwidth management, QoS management, load balancing, session management and control, and network management may be integrated, and with suitable logic and/or software, may be executed by the processor 410.

In operation, the transmitter 404 may be adapted to send a first messaging protocol message between a first switch and a first access point. The receiver 406 may be adapted to receive a second messaging protocol message from the first access point and the first switch. In response to the transmittal of the first messaging protocol message, a second messaging protocol message may be received. The controller 412 may be adapted to allocate system resources for one or more devices using any one or more of the first second and/or third messaging protocol messages. These devices may include but are not limited to the first switch, a second switch, the first access point, the second access point, and one or more access devices. The system resources may be allocated to ensure that at least minimal acceptable level of service is maintained.

The generator 408 may be adapted to generate the first messaging protocol message by the first switch. The receiver 406 may be adapted to receive the second messaging protocol message from a second switch. The processor 410 may be adapted to control the transmitter 404, the receiver 406, the controller 412 and the generator 408. The processor 410 may utilize one or more messaging protocol messages to control transmitter 404, receiver 406, generator 408, bandwidth controller 422, QoS controller 414, load balancing controller 416, session controller 418 and network management controller 420.

In accordance with an aspect of the invention, the switch may be adapted to facilitate network management, including activities such as, QoS management and bandwidth management, by utilizing a messaging protocol. The messaging protocol may utilize one or more protocols associated with a device communication protocol (DCP) umbrella (DCPU). The messaging protocol utilized by the switch may be adapted to run over the transmission control protocol (TCP) or user datagram protocol (UDP) using for example, a well-known port number specified under the framework of the device communication protocol. Under the DCP umbrella, there may be several sub-protocols defined for the purpose of facilitating interoperability with other products. Some of these products may include but are not limited to, cable modems and cable modem termination systems (CMTS) equipment. The messaging protocol utilized by the switch may be adapted to include the necessary protocols under DCP to facilitate communication for wired and/or WLAN devices.

In accordance with an aspect of the invention, the switch may utilize the messaging protocol to facilitate various network management activities between various wireless networking devices and/or clients. In an embodiment of the invention, one or more of WLAN switches 306, 308 may be adapted to utilize the messaging protocol to facilitate communication with one or more of the access points 310, 312, 314, 316, 318, 320 of FIG. 3. Information exchanged between these two devices may include, but is not limited to, control, configuration and status information of the devices and also client session information. At least some of this information may be used for QoS management. The control information may include, for example, signaling information that may be communicated in-band or out-of-band.

The switch may utilize the messaging protocol, which may include a plurality of message types. In accordance with an aspect of the invention, the switch may utilize a messaging protocol that may include, for example, six (6) categories of messages or message types. Notwithstanding, the invention is not so limited. These messages and their usage may be illustrated as follows:
**AP_Status: from AP to Switch or AP**
   An AP_Status message may be used to indicate, for example, an access point capacity, bandwidth allocation, the number of attached clients, signal strength, power levels, etc.
**AP_Config: from Switch to AP**
   An AP_Config message may be used to configure an access point to accommodate a client. This may include but is not limited to, 802.11e QoS, security information, etc.
**Switch_Status: from Switch to Switch**
   A Switch_Status message may be used to indicate a switch's association with one or more clients. This may include but is not limited to, client session information, access control, QoS parameters, etc.
**Switch_Config: from Switch to Switch**
   A Switch_Config message may be used to configure a switch such as a WLAN Switch to accommodate a client. The may include but is not limited to, access control, QoS configuration, etc.
**Client_Status: from AP to Switch**
   A Client_Status message may be used to indicate a client's information. This may include but is not limited to, client identification, associated MAC address, session status, connecting location, etc.
**Device_Discovery: any device to any device**
   In a client-server model of network services, the Device_Discovery message may be used by a switch and/or a server to discover clients or by client to discover servers. The message may be broadcast to some or all devices in the subnet to draw responses from the intended devices.

In each of the message types above, the message may include, for example four (4) message subtypes ― .request, .data, .alert, and .ack. A message type/subtype pair of .request and .data may represent the request of data and a corresponding response of data itself. The subtype pair of .alert and .ack may represent the voluntary transmission of data and its acknowledgement. Additionally, there may be two conventions utilized in a message exchange sequence. Accordingly, if a message exchange sequence starts with a request (.req), it may be followed by a reactive transmission of data (.data). Similarly, if a message exchange sequence starts with a proactive transmission of data (.alert), it is followed by an acknowledgement (.ack). In accordance with an aspect of the invention, one or more message types and/or subtype may be used to facilitate bandwidth management.

United States Patent Application Serial No. 10/607,094 entitled "Communication System and Method in a Hybrid Wired/Wireless Local Area Network" filed on June 26, 2003, discloses a messaging protocol that may be utilized by the switch in accordance with an embodiment of the invention, and is incorporated herein by reference in its entirety. Exemplary valid fields and subfields for various messaging protocol messages that may be utilized by the switch in accordance with an aspect of the invention are disclosed therein.

In another embodiment of the invention, the switch may include a network management controller that may be configured for network management and may provide valuable information that may be utilized for QoS management. In this regard, the switch may be adapted to utilize, for example, the messaging protocol to transfer networking monitoring and/or status messages such as SNMP and RMON statistics from an old attachment or connection point to a new connection point. In this regard, the switch may be configured to use the messaging protocol to enable location-specific management of at least certain clients and/or network devices. In this regard, the switch may send client association information to a central management entity that may be aware of the location of the various access points and/or switches in the network. This information may be disseminated to, for example a QoS controller, a bandwidth controller and/or a load balancing controller. Accordingly, a decision may subsequently be made to determine whether to allow or disallow access from certain locations in order to maximize bandwidth usage, balance a load within the network and/or provide a specified QoS.

For example, information pertaining to at least some detected clients may be transferred to the switch. Accordingly, the load balancing manager and/or controller located in the switch may use this information to achieve efficient load balancing. In this regard, the load balancing controller may include suitable circuitry and/or software that may be adapted to receive and assess various client information and effectuate an efficient load balancing. Parameters such as signal strength, access level and device type, may be indicative of the information that may be used to effectuate efficient load balancing. Client association/dissociation information may be communicated between the load balancing manager and one or more access points and/or switches in order to ensure that an acceptable level of service may be received by accessing clients. Once the load-balancing manager determines an optimal load configuration, new client and/or access point association information may be passed to the various access points in the network using messaging protocol messages.

In another embodiment of the invention, the switch may include a QoS controller that may be configured to utilize the messaging protocol to transfer QoS parameters from an original switch port to a new switch port, in order to facilitate roaming. One or more switches in the network may be adapted to facilitate roaming between various access points located in the same network or between different networks. This may affect the QoS handling of, for example, downstream traffic destined for the roaming client or access device. In this regard, a switch may be adapted to utilize one or more messaging protocol messages to automatically transfer various pertinent network management parameters between access points and or other switches. This centralized management may eliminate a need for a distributed management interface, thereby providing a more robust communication system.

In another embodiment of the invention, to facilitate roaming, a switch may be adapted to utilize the messaging protocol to transfer QoS parameters from an old access point to a new access point. This may affect upstream traffic from the client to an access point. In this regard, the switch may utilize one or more messaging protocol messages to transfer QoS parameters from the old access point to the new access point. Since this handling of QoS parameters may be similar to the handling of client traffic, the messaging protocol may be used to provide seamless roaming, which may provide a greater level of acceptable service.

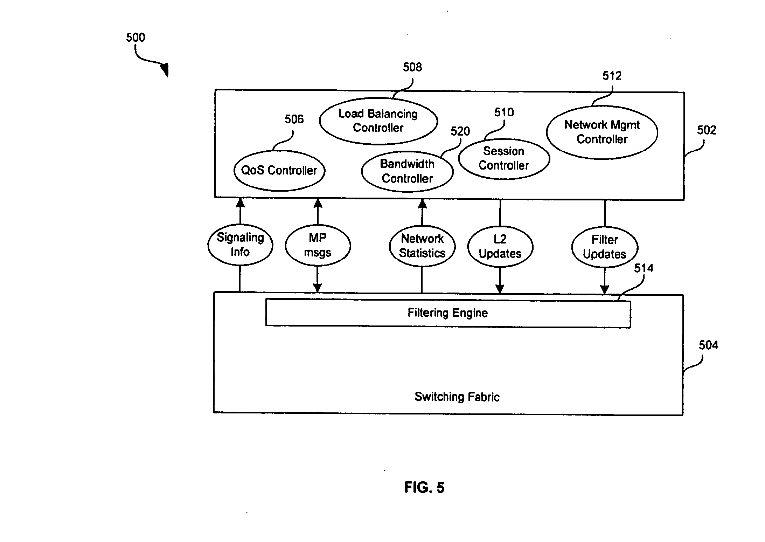

FIG. 5 is a block diagram 500 of an exemplary switching system for network management in a wireless local area network. Referring to FIG. 5, there is shown a CPU block 502 and a switching fabric block 804. The CPU block 502 may include a quality of service (QoS) controller block 506, a bandwidth management controller block 520, a load balancing controller block 508, a session controller block 510 and a network management control block 512. The switching fabric block 504 may include a filtering engine block 514. The CPU block 502 may be adapted to interface with the switching fabric block 504. One or more of the QoS controller block 506, load balancing controller block 508, session controller block 510 and network management control block 512 may interface directly with the filtering engine block 514.

In operation, selected signaling packets may be communicated from the switching fabric block 504 to one or more of the QoS controller block 506, bandwidth management controller block 520, load balancing controller block 508, session controller block 510 and network management control block 512. Messaging protocol messages may be used to facilitate communication between the switching fabric block 504 and one or more of the bandwidth management controller block 520, QoS controller block 506, load balancing controller block 508, session controller block 510 and network management control block 512. The selected signaling packets may include, but are not limited to, VoIP packets, and streaming media packets including voice, video and data. The filtering engine block 514 may be adapted to filter information received from one or more of the QoS controller block 506, bandwidth management controller block 520, load balancing controller block 508, session controller block 510 and a network management control block 512. In this regard, the filtering engine block 514 may be adapted to filter messaging protocol messages used to control switching functions, network traffic statistics messages, layer two (2) address update messages, and filter update messages. The filter update messages may include, but is not limited to, QoS messages, bandwidth management messages, access control messages and load balancing messages.

In accordance with an embodiment of the invention, the switching system for network management may include a session control process that may be adapted to manage and control at least one client database and session information for some or all active clients. In an embodiment of the invention, the switching system for network management may be adapted to provide session management information that may be utilized for bandwidth management. The session control process may be configured to enforce access control based on, for example, a client session, a subnet, a network management application, and switch ports. Access control may be used to facilitate, for example, QoS management, bandwidth management and load balancing in at least a portion of the network. The session control process may also control and manage switching intelligence and to determine bandwidth availability in order to facilitate activities such as roaming.

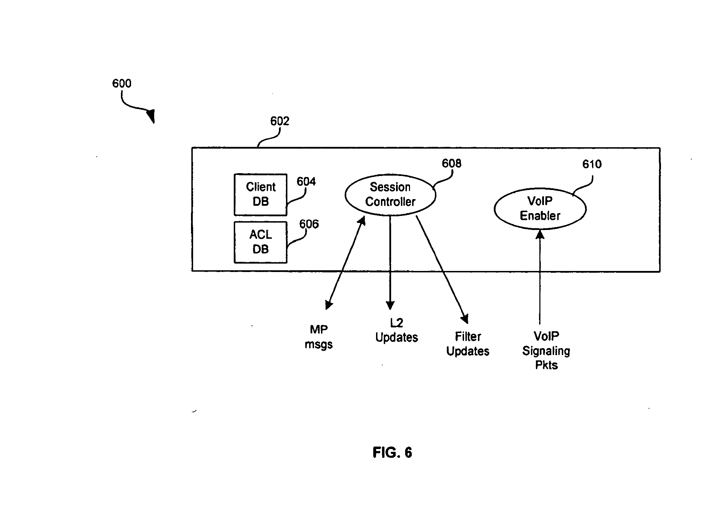

FIG. 6 is a block diagram 600 of an exemplary session control process with respect to FIG. 5 that may be utilized by the switching system for network management in accordance with an embodiment of the invention. Referring to FIG. 6, there is shown a session control process 602 having a client database 604, an access control list (ACL) database 606, a session control manager 608 and a VolP enabler 610. One or more interfaces may be adapted to provide communication between session manager 608 and the client database 604 and the ACL database 606. The session manager 608 may include at least one interface that may be adapted to facilitate communication with the VolP enabler 610.

In operation, the session control manager 608 may be adapted to process, for example, messaging protocol messages, layer two (2) updates, and filter updates. The session control manager 608 may be adapted to receive information from one or more of client database 604 and ACL database 606. The VolP enabler 610 may be adapted to process VolP signaling packets. VolP enabler 610 may also be adapted to decode various standards-based VolP signaling packets and prioritize filter setup. Information from the session control manager 608 may be communicated to the bandwidth management controller 520, the QoS controller 506, the load balancing controller 508, and the network management controller 512 which are illustrated in FIG. 5.

In an embodiment of the invention, the switching system 602 may include a load balancing process that may be adapted to obtain access point load from, for example, a QoS management process and a bandwidth management process. The network management process may include but is not limited to SNMP, RMON, RMON2, and MIB. The load balancing process may be adapted to keep an access point database on, for example, a plurality or bank of access points. The load balancing process may include necessary intelligence for making load distribution decisions. The access point database may be accessible by one or more of the QoS controller 506, the bandwidth management controller 520, the load balancing controller 508, and the network management controller 512 which are illustrated in FIG. 5. In addition, the bandwidth management controller 520 may be adapted to request information from the session control manager 608 and/or the load balancing process in order to facilitate bandwidth management.

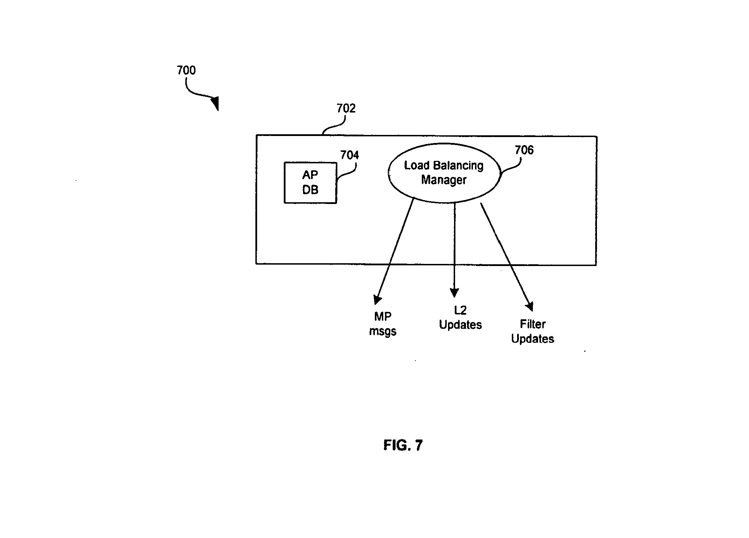

FIG. 7 is a block diagram 700 of an exemplary load balancing process with respect to FIG. 5 that may be utilized by the switching system for network management in accordance with an embodiment of the invention. Referring to FIG. 7, there is shown a load balancing process 702 having an access point database 702 and a load balancing manager 706. At least one interface may be adapted to provide communication between access point database 704 and the load balancing manager 706. The load balancing manager 706 may be adapted to include at least one interface that may facilitate communication with a network management process.

In operation, the load balancing manager 706 may be adapted to process messaging protocol messages, layer two (2) updates, and filter updates. The load balancing manager 706 may receive network statistics from a one or more network management processes. Information from the access point database 704 may be utilized by the load balancing manager 706 for making load balancing decisions.

In an embodiment of the invention, the switching system for network management may include a QoS enabling process that may be adapted to control and manage activities such as, traffic policing, metering filters, and protocol configurations. In this regard, the QoS enabling process may be adapted to manage, for example, 8012.11e based configurations that may be sent to the access point. A VolP enabler may be adapted to decode various standard-based VolP signaling packets and prioritize filter setup.

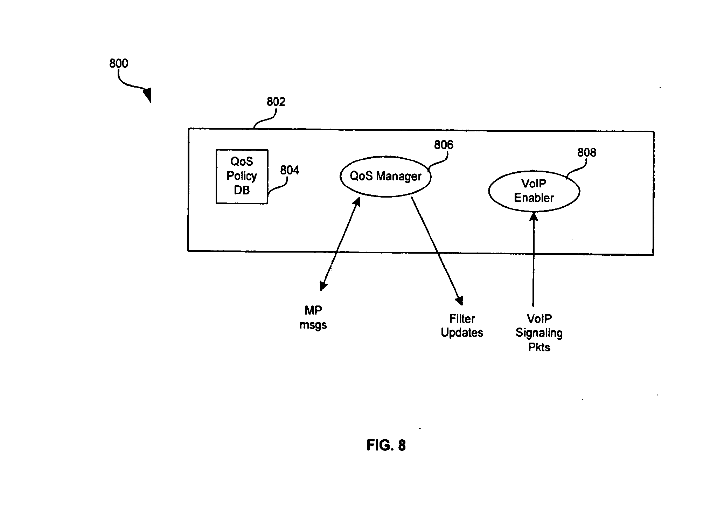

FIG. 8 is a block diagram 800 of an exemplary QoS enabling process with respect to FIG. 8 that may be utilized by an the switching system for network management in accordance with an embodiment of the invention. Referring to FIG. 8, there is shown QoS enabling process 802 having QoS policy database 804, a QoS manager 806 and a VolP enabler 808. At least one interface may be adapted to provide communication between QoS policy database 804 and the QoS manager 806. The QoS manager 806 may be adapted to include at least one interface that may facilitate communication with, for example, the VolP enabler 808.

In operation, the QoS manager 806 may be adapted to process, for example, messaging protocol messages, and filter updates. The QoS manager 806 may send and receive VolP signaling information to and from VoIP enabler 808 for making QoS related decisions. In certain instances, information related to the QoS management may be utilized for bandwidth management. Accordingly, with reference to FIG. 4, the bandwidth management controller 412 may be adapted to receive pertinent QoS related information from the QoS controller 414.

In one aspect of the invention, the QoS controller 414, the load balancing controller 416, the session controller 418, the network management controller 420 and/or the bandwidth management controller 412 may be adapted to transfer and/or store information in a database, for example, database 424. In this regard, the QoS controller may be adapted to store at least some of its related QoS related information in database 424. Accordingly, whenever a need arises, the bandwidth management controller may access database 424 and retrieve any QoS related information that may be pertinent to bandwidth management.

In another aspect of the invention, in certain instances, the bandwidth management controller 422 may be adapted to request required QoS related information from the QoS controller 414. To facilitate bandwidth management, real-time information not necessarily located in the database 424 may be requested from the QoS controller 414 whenever a need arises. Additionally, through this mechanism, the QoS controller 414 may be adapted to also request an receive related information from any one or more of the load balancing controller 416, the session controller 418, the network management controller 420, the bandwidth management controller 422 and/or the database 424. The bandwidth management process may be executed in an adaptive manner and may occur in real-time.

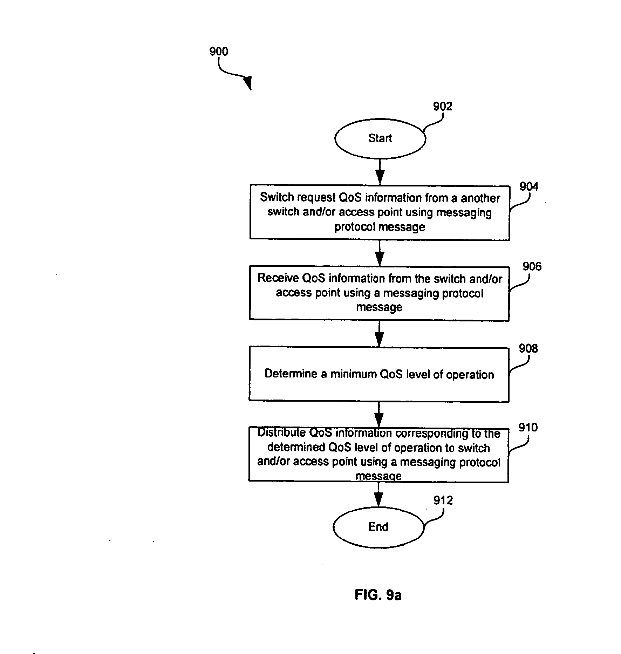

FIG. 9a is a flowchart 900 of exemplary steps for a QoS enabling process that may be utilized by the switching system for network management in accordance with an embodiment of the invention. Referring to FIG. 9a, subsequent to start step 902, in step 904, a switch may request QoS information from another switch and/or access point using a messaging protocol message. In step 906, QoS information may be received from the switch and/or the access point using a messaging protocol message. In step 908, a minimum QoS level of operation may be determined by the switch. In step 910, QoS information corresponding to the determined QoS level of operation may be distributed to switch and/or access point using a messaging protocol message. The exemplary steps may end with step 910.

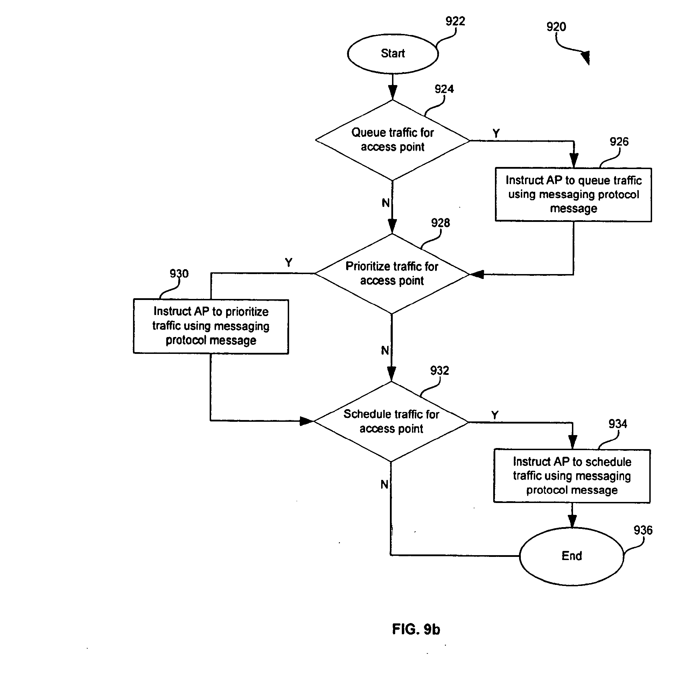

FIG. 9b is a flowchart 920 of exemplary steps for a QoS enabling process that may be utilized by the switching system for network management in accordance with an embodiment of the invention. Referring to FIG. 9b, subsequent to start step 922, in step 924, a switch may determine whether to queue traffic for an access point. If it is determined that traffic should be queued, then in step 926, an access point may be instructed to queue traffic using a messaging protocol message. In step 928, a switch may determine whether to prioritize traffic for an access point. If it is determined that traffic should be prioritized, then in step 930, an access point may be instructed to prioritize traffic using a messaging protocol message. In step 932, a switch may determine whether to schedule traffic for an access point. If it is determined that traffic should be scheduled, then in step 934, an access point may be instructed to prioritize traffic using a messaging protocol message.

Step 925 may be executed subsequent to step 926 or if it is determined that traffic should not be queued for an access point in step 924. Step 932 may be executed subsequent to step 930 or if it is determined that traffic should not be prioritized for an access point in step 928. The end step 925 may be executed subsequent to step 932 or if it is determined that traffic should not be scheduled for an access point in step 934.

Notwithstanding, the exemplary steps illustrated in FIG. 9a and FIG. 9b, it should be recognized that other steps may be added, substituted or made optional without departing from the scope of the invention. Referring to FIG. 9a, for example, step 904 may be an optional step. In this regard, an access point and/or a switch may be adapted to send QoS information, for example in a dynamic manner, using a messaging protocol message to the switch.

In another aspect of the invention, network management may be adapted to provide link diagnostics. In this regard, one or more messaging protocol messages may be used to provide testing and diagnostics. Testing and diagnostics may be carried out on the wireless interface of an access point to determine, for example, connectivity status and throughput performance of the interface. Additionally, messaging protocol messages may be used to examine and/or modify radio information such as operating channel, transmit power, supported data rates, and regulatory settings. During link testing, messaging protocol messages may be used to determine signal strength and quality, diagnose client association, dissociation and authentication, and to examine various packets sent over the wireless interface.

In accordance with another embodiment of the invention, dependent on the modulation scheme utilized, one or more of the PLCP frames illustrated in FIG. 1b, FIG. 1c, FIG. 1d and FIG. 1e may be adapted to contain information which may be utilized for providing communication in accordance with various embodiments of the invention. Additionally, the PLCP frames may be adapted to convey information for any one or more of the 801.11a, 802.11b and 802.11g modes of operation utilized by access points and/or access devices in accordance the embodiments of the invention.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention also may be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

Notwithstanding, the invention and its inventive arrangements disclosed herein may be embodied in other forms without departing from essential attributes thereof. Accordingly, reference should be made to the following claims, rather than to the foregoing specification, as indicating the scope of the invention. In this regard, the description above is intended by way of example only and is not intended to limit the present invention in any way, except as set forth in the following claims.

While the present invention has been described with reference to certain embodiments, it will be understood by those skilled in the art that various changes may be made without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for providing network management for a hybrid wired/wireless local area network comprising a first network domain (214) with a first switch (202, 222, 306, 308, 402) coupled to a first access point (204, 208, 210, 214, 224, 226, 228, 230, 232, 310, 312, 314, 316, 318, 320), and a second network domain (234) with a second switch (202, 222, 306, 308, 402) coupled to a second access point (204, 208, 210, 214, 224, 226, 228, 230, 232, 310, 312, 314, 316, 318, 320), the method comprising:
receiving, in the second switch, from at least one of the first access point and the first switch, a first message of a messaging protocol containing quality of service, QoS, information;
responsive to said first message of the messaging protocol, determining, by the second switch, at least a minimum QoS level based on acceptable levels of latency and bandwidth availability for operation of said first switch, said first access point, said second access point, and said second switch; and
distributing, by the second switch, QoS information corresponding to said determined minimum QoS level to at least the first switch using a second message of the messaging protocol;
establishing, by at least one switch, rules to be utilized by at least one of the access points in carrying out QoS management activities in order to maintain said determined minimum QoS level;
propagating said rules from the at least one switch to said at least one of the access points using said messaging protocol; and
forcing, by the second switch, an access device (322, 324, 326, 328, 330, 332, 334, 336, 338) to roam to the first network domain based on said distributed QoS information.

2. The method according to claim 1, further comprising, if insufficient bandwidth or channel capacity to provide said determined minimum QoS level is determined by at least one switch (202, 222, 306, 308, 402), forcing, by the at least one switch (202, 222, 306, 308, 402), existing and/or new incoming access devices (322, 324, 326, 328, 330, 332, 334, 336, 338) to roam.

3. The method according to claim 1 or 2, further comprising maintaining a list of access devices (322, 324, 326, 328, 330, 332, 334, 336, 338) that have been forced to roam.

4. The method according to the preceding claim, further comprising, if insufficient bandwidth or channel capacity to provide a minimal acceptable QoS is determined by at least one switch (202, 222, 306, 308, 402), signaling or notifying, by the at least one switch (202, 222, 306, 308, 402), access devices (322, 324, 326, 328, 330, 332, 334, 336, 338) on the list to reattempt establishment of service and permitting access to the service provided by the hybrid wired/wireless local area network.

5. The method according to claim 1, further comprising determining available bandwidth for any one or more of a plurality of access points (204, 208, 210, 214, 224, 226, 228, 230, 232, 310, 312, 314, 316, 318, 320) and/or switches (202, 222, 306, 308, 402).

6. The method according to claim 1, further comprising providing, by the at least one switch, access to at least one of a plurality of access devices (322, 324, 326, 328, 330, 332, 334, 336, 338) based on said distributed QoS information.

7. The method according to claim 6, further comprising queuing, by at the least one switch, traffic associated with at least one of said plurality of access devices (322, 324, 326, 328, 330, 332, 334, 336, 338) to maintain said determined minimum QoS level.

8. The method according to claim 7, further comprising prioritizing, by the at least one switch, said traffic associated with at least one of said plurality of access devices (322, 324, 326, 328, 330, 332, 334, 336, 338) to maintain said determined minimum QoS level.

9. The method according to claim 1, further comprising determining, by the at least one switch, whether to schedule traffic for an access point.

10. The method according to claim 1, wherein said distributing further comprises distributing said QoS information to at least a portion of the hybrid wired/wireless local area network.

11. The method according to claim 1, further comprising allocating, by the at least one switch, bandwidth to maintain said determined minimum QoS level.

12. The method according to claim 1, further comprising balancing, by the at least one switch, a load on at least one of said first switch, said first access point, said second access point and said second switch to maintain said determined minimum QoS level.

13. The method according to claim 12, wherein each of said first and second messages of the messaging protocol comprises at least one message selected from the group consisting of an access point status message, access point configuration message, a switch status message, a switch configuration message, a client status message and a device discovery message.

14. A machine-readable storage, having stored thereon a computer program having at least one code section to be executed on a computer system for performing the method according to claims 1 to 13.

15. A system for providing network management for a hybrid wired/wireless local area network comprising a first network domain (214) with a first switch (202, 222, 306, 308, 402) coupled to a first access point (204, 208, 210, 214, 224, 226, 228, 230, 232, 310, 312, 314, 316, 318, 320), and a second network domain (234) with a second switch (202, 222, 306, 308, 402) coupled to a second access point (204, 208, 210, 214, 224, 226, 228, 230, 232, 310, 312, 314, 316, 318, 320), wherein:
the second switch is adapted to receive from at least one of the first access point and the first switch, a first message of the messaging protocol containing quality of service, QoS, information;
the second switch is adapted to determine at least a minimum QoS level based on acceptable levels of latency and bandwidth availability for operation of said first switch, said first access point,
said second access point, and said second switch in response to said first message of the messaging protocol;
the second switch is adapted to distribute QoS information corresponding to said determined minimum QoS level to at least the first switch using a second message of the messaging protocol;
at least one switch is adapted to establish rules to be utilized by at least one of the access points in carrying out QoS management activities in order to maintain said determined minimum QoS level;
at least one switch is adapted to propagate said rules from the at least one switch to said at least one of the access points using said messaging protocol; and
the second switch is adapted to force an access device (322, 324, 326, 328, 330, 332, 334, 336, 338) to roam to the first network domain based on said distributed QoS information.

## Patentansprüche

1. Verfahren zum Bereitstellen eines Netzwerkmanagements für ein hybrides drahtgebundenes/drahtloses lokales Netzwerk, das eine erste Netzwerkdomäne (214) mit einem ersten Switch (202, 222, 306, 308, 402), der mit einem ersten Zugangspunkt (204, 208, 210, 214, 224, 226, 228, 230, 232, 310, 312, 314, 316, 318, 320) verbunden ist, und eine zweite Netzwerkdomäne (234) mit einem zweiten Switch (202, 222, 306, 308, 402) umfasst, der mit einem zweiten Zugangspunkt (204, 208, 210, 214, 224, 226, 228, 230, 232, 310, 312, 314, 316, 318, 320) verbunden ist, wobei das Verfahren umfasst:
- Empfangen, im zweiten Switch, vom ersten Zugangspunkt und/oder ersten Switch einer ersten Nachricht eines Nachrichtenübermittlungsprotokolls, die Dienstgüte- (QoS-/Quality-of-Service-) Informationen enthält,
- in Antwort auf die erste Nachricht des Nachrichtenübermittlungsprotokolls, Bestimmen, durch den zweiten Switch, zumindest eines minimalen QoS-Niveaus basierend auf akzeptablen Niveaus der Latenzzeit und Bandbreitenverfügbarkeit zum Betrieb des ersten Switch, des ersten Zugangspunkts, des zweiten Zugangspunkts und des zweiten Switch, und
- Verteilen, durch den zweiten Switch, von dem bestimmten minimalen QoS-Niveau entsprechenden QoS-Informationen zumindest an den ersten Switch unter Verwendung einer zweiten Nachricht des Nachrichtenübermittlungsprotokolls,
- Aufstellen, durch wenigstens einen Switch, von Regeln, die von wenigstens einem der Zugangspunkte beim Ausführen von QoS-Managementaktivitäten zu verwenden sind, um das bestimmte minimale QoS-Niveau aufrechtzuerhalten,
- Verbreiten der Regeln von dem wenigstens einen Switch an den wenigstens einen der Zugangspunkte unter Verwendung des Nachrichtenübermittlungsprotokolls, und
- Zwingen, durch den zweiten Switch, einer Zugangseinrichtung (322, 324, 326, 328, 330, 332, 334, 336, 338) zum Roaming in der ersten Netzwerkdomäne basierend auf den verteilten QoS-Informationen.

2. Verfahren nach Anspruch 1, das, wenn durch wenigstens einen Switch (202, 222, 306, 308, 402) eine zum Bereitstellen des bestimmten minimalen QoS-Niveaus unzureichende Bandbreite oder Kanalkapazität bestimmt wird, ferner das Zwingen, durch den wenigstens einen Switch (202, 222, 306, 308, 402), vorhandener und/oder neuer ankommender Zugangseinrichtungen (322, 324, 326, 328, 330, 332, 334, 336, 338) zum Roaming umfasst.

3. Verfahren nach Anspruch 1 oder 2, das ferner das Führen einer Liste von Zugangseinrichtungen (322, 324, 326, 328, 330, 332, 334, 336, 338) umfasst, die zum Roaming gezwungen worden sind.

4. Verfahren nach dem vorhergehenden Anspruch, das, wenn durch wenigstens einen Switch (202, 222, 306, 308, 402) eine zum Bereitstellen einer minimalen akzeptablen QoS unzureichende Bandbreite oder Kanalkapazität bestimmt wird, ferner das Signalisieren oder Benachrichtigen, durch den wenigstens einen Switch (202, 222, 306, 308, 402), der Zugangseinrichtungen (322, 324, 326, 328, 330, 332, 334, 336, 338) auf der Liste umfasst, das Einrichten eines Dienstes und das Gewähren des Zugangs zu dem Dienst erneut zu versuchen, der durch das hybride drahtgebundene/drahtlose lokale Netzwerk bereitgestellt wird.

5. Verfahren nach Anspruch 1, das ferner das Bestimmen der verfügbaren Bandbreite für einen beliebigen oder mehrere einer Mehrzahl Zugangspunkte (204, 208, 210, 214, 224, 226, 228, 230, 232, 310, 312, 314, 316, 318, 320) und/oder Switches (202, 222, 306, 308, 402) umfasst.

6. Verfahren nach Anspruch 1, das ferner das Bereitstellen, durch den wenigstens einen Switch, eines Zugangs zu wenigstens einer der Zugangseinrichtungen (322, 324, 326, 328, 330, 332, 334, 336, 338) basierend auf den verteilten QoS-Informationen umfasst.

7. Verfahren nach Anspruch 6, das ferner das Einreihen, durch den wenigstens einen Switch, von Verkehr in Warteschlangen (Queuing) umfasst, der wenigstens einer der Mehrzahl Zugangseinrichtungen (322, 324, 326, 328, 330, 332, 334, 336, 338) zugeordnet ist, um das bestimmte minimale QoS-Niveau aufrechtzuerhalten.

8. Verfahren nach Anspruch 7, das das Priorisieren, durch den wenigstens einen Switch, des wenigstens einer der Mehrzahl Zugangseinrichtungen (322, 324, 326, 328, 330, 332, 334, 336, 338) zugeordneten Verkehrs umfasst, um das bestimmte minimale QoS-Niveau aufrechtzuerhalten.

9. Verfahren nach Anspruch 1, das ferner das Bestimmen, durch den wenigstens einen Switch, umfasst, ob der Verkehr für einen Zugangspunkt zeitlich zu planen ist.

10. Verfahren nach Anspruch 1, wobei das Verteilen ferner ein Verteilen der QoS-Informationen an wenigstens einen Abschnitt des hybriden drahtgebundenen/drahtlosen lokalen Netzwerks umfasst.

11. Verfahren nach Anspruch 1, das ferner das Zuweisen, durch den wenigstens einen Switch, einer Bandbreite umfasst, um das bestimmte minimale QoS-Niveau aufrechtzuerhalten.

12. Verfahren nach Anspruch 1, das ferner das Ausgleichen, durch den wenigstens einen Switch, einer Belastung des ersten Switch, des ersten Zugangspunkts, des zweiten Zugangspunkts und/oder des zweiten Switch umfasst, um das bestimmte minimale QoS-Niveau aufrechtzuerhalten.

13. Verfahren nach Anspruch 12, wobei die erste und zweite Nachricht des Nachrichtenübermittlungsprotokolls jeweils wenigstens eine Nachricht umfassen, die aus der Gruppe ausgewählt wird, die aus einer Zugangspunkt-Statusnachricht, einer Zugangspunkt-Konfigurationsnachricht, einer Switch-Statusnachricht, einer Switch-Konfigurationsnachricht, einer Client-Statusnachricht und einer Einrichtungsermittlungsnachricht besteht.

14. Maschinenlesbarer Speicher, in dem ein Computerprogramm gespeichert ist, das wenigstens einen Codeabschnitt aufweist, der in einem Computersystem auszuführen ist, um das Verfahren nach den Ansprüchen 1 bis 13 durchzuführen.

15. System zum Bereitstellen eines Netzwerkmanagements für ein hybrides drahtgebundenes/drahtloses lokales Netzwerk, das eine erste Netzwerkdomäne (214) mit einem ersten Switch (202, 222, 306, 308, 402), der mit einem ersten Zugangspunkt (204, 208, 210, 214, 224, 226, 228, 230, 232, 310, 312, 314, 316, 318, 320) verbunden ist, und eine zweite Netzwerkdomäne (234) mit einem zweiten Switch (202, 222, 306, 308, 402) umfasst, der mit einem zweiten Zugangspunkt (204, 208, 210, 214, 224, 226, 228, 230, 232, 310, 312, 314, 316, 318, 320) verbunden ist, wobei:
- der zweite Switch dafür ausgelegt ist, vom ersten Zugangspunkt und/oder ersten Switch eine erste Nachricht des Nachrichtenübermittlungsprotokolls zu empfangen, die Dienstgüte- (QoS-/Quality-of-Service-) Informationen enthält,
- der zweite Switch dafür ausgelegt ist, in Antwort auf die erste Nachricht des Nachrichtenübermittlungsprotokolls, basierend auf akzeptablen Niveaus der Latenzzeit und Bandbreitenverfügbarkeit zum Betrieb des ersten Switch, des ersten Zugangspunkts, des zweiten Zugangspunkts und des zweiten Switch zumindest ein minimales QoS-Niveau zu bestimmen,
- der zweite Switch dafür ausgelegt ist, dem bestimmten minimalen QoS-Niveau entsprechende QoS-Informationen unter Verwendung einer zweiten Nachricht des Nachrichtenübermittlungsprotokolls zumindest an den ersten Switch zu verteilen,
- wenigstens ein Switch dafür ausgelegt ist, Regeln aufzustellen, die von wenigstens einem der Zugangspunkte beim Ausführen von QoS-Managementaktivitäten zu verwenden sind, um das bestimmte minimale QoS-Niveau aufrechtzuerhalten,
- wenigstens ein Switch dafür ausgelegt ist, die Regeln von dem wenigstens einen Switch an den wenigstens einen der Zugangspunkte unter Verwendung des Nachrichtenübermittlungsprotokolls zu verbreiten, und
- der zweite Switch dafür ausgelegt ist, eine Zugangseinrichtung (322, 324, 326, 328, 330, 332, 334, 336, 338) basierend auf den verteilten QoS-Informationen zum Roaming in der ersten Netzwerkdomäne zu zwingen.

## Revendications

1. Procédé de fourniture de gestion de réseau pour un réseau local hybride filaire/sans fil comprenant un premier domaine (214) de réseau avec un premier commutateur (202, 222, 306, 308, 402) couplé à un premier point d'accès (204, 208, 210, 214, 224, 226, 228, 230, 232, 310, 312, 314, 316, 318, 320), et un deuxième domaine (234) de réseau avec un deuxième commutateur (202, 222, 306, 308, 402) couplé à un deuxième point d'accès (204, 208, 210, 214, 224, 226, 228, 230, 232, 310, 312, 314, 316, 318, 320), le procédé comprenant :
la réception, dans le deuxième commutateur, d'au moins un parmi le premier point d'accès et le premier commutateur, d'un premier message d'un protocole de messagerie contenant une information de qualité de service, QoS ;
en réponse audit premier message du protocole de messagerie, la détermination, par le deuxième commutateur, d'au moins un niveau minimum de QoS sur la base de niveaux acceptables de latence et de disponibilité de largeur de bande pour un fonctionnement dudit premier commutateur, dudit premier point d'accès, dudit deuxième point.d'accès, et dudit deuxième commutateur ; et
la distribution, par le deuxième commutateur, d'une information de QoS correspondant audit niveau minimum de QoS déterminé à au moins le premier commutateur en utilisant un deuxième message du protocole de messagerie ;
l'établissement, par au moins un commutateur, de règles devant être utilisées par au moins un des points d'accès lors de l'exécution d'activités de gestion de QoS afin de maintenir ledit niveau minimum de QoS déterminé ;
la propagation desdites règles de l'au moins un commutateur audit au moins un des points d'accès en utilisant ledit protocole de messagerie ; et
le forçage, par le deuxième commutateur, d'un dispositif d'accès (322, 324, 326, 328, 330, 332, 334, 336, 338) à rejoindre en itinérance le premier domaine de réseau sur la base de ladite information de QoS distribuée.

2. Procédé selon la revendication 1, comprenant en outre, si une largeur de bande ou une capacité de canaux insuffisante pour fournir ledit niveau minimum de QoS déterminé est déterminée par au moins un commutateur (202, 222, 306, 308, 402), le forçage, par l'au moins un commutateur (202, 222, 306, 308, 402) de dispositifs d'accès (322, 324, 326, 328, 330, 332, 334, 336, 338) existants ou nouveaux entrants à passer en itinérance.

3. Procédé selon la revendication 1 ou 2, comprenant en outre le maintien d'une liste de dispositifs d'accès (322, 324, 326, 328, 330, 332, 334, 336, 338) qui ont été forcés à passer en itinérance.

4. Procédé selon la revendication précédente, comprenant en outre, si une largeur de bande ou une capacité de canaux insuffisante pour fournir une QoS minimum acceptable est déterminée par au moins un commutateur (202, 222, 306, 308, 402), la signalisation ou la notification, par l'au moins un commutateur (202, 222, 306, 308, 402) à des dispositifs d'accès (322, 324, 326, 328, 330, 332, 334, 336, 338) sur la liste, de tenter à nouveau un établissement de service, et l'autorisation d'accès au service fourni par le réseau local hybride filaire/sans fil.

5. Procédé selon la revendication 1, comprenant en outre la détermination d'une largeur de bande disponible pour un ou plusieurs quelconque(s) parmi une pluralité de points d'accès (204, 208, 210, 214, 224, 226, 228, 230, 232, 310, 312, 314, 316, 318, 320) et/ou commutateurs (202, 222, 306, 308, 402).

6. Procédé selon la revendication 1, comprenant en outre la fourniture, par l'au moins un commutateur, d'un accès à au moins un parmi une pluralité de dispositifs d'accès (322, 324, 326, 328, 330, 332, 334, 336, 338) sur la base de ladite information de QoS distribuée.

7. Procédé selon la revendication 6, comprenant en outre la mise en file d'attente, par l'au moins un commutateur, d'un trafic associé avec au moins un parmi ladite pluralité de dispositifs d'accès (322, 324, 326, 328, 330, 332, 334, 336, 338) pour maintenir ledit niveau minimum de QoS déterminé.

8. Procédé selon la revendication 7, comprenant en outre la priorisation, par l'au moins un commutateur, dudit trafic associé avec au moins un parmi ladite pluralité de dispositifs d'accès (322, 324, 326, 328, 330, 332, 334, 336, 338) pour maintenir ledit niveau minimum de QoS déterminé.

9. Procédé selon la revendication 1, comprenant en outre la détermination, par l'au moins un commutateur, s'il convient de programmer un trafic pour un point d'accès.

10. Procédé selon la revendication 1, dans lequel ladite distribution comprend en outre la distribution de ladite information de QoS à au moins une partie du réseau local hybride filaire/sans fil.

11. Procédé selon la revendication 1, comprenant en outre l'attribution, par l'au moins un commutateur, d'une largeur de bande pour maintenir ledit niveau minimum de QoS déterminé.

12. Procédé selon la revendication 1, comprenant en outre l'équilibrage, par l'au moins un commutateur, d'une charge sur au moins un parmi ledit premier commutateur, ledit premier point d'accès, ledit deuxième point d'accès, et ledit deuxième commutateur pour maintenir ledit niveau minimum de QoS déterminé.

13. Procédé selon la revendication 12, dans lequel chacun desdits premier et deuxième messages du protocole de messagerie comprend au moins un message choisi parmi le groupe consistant en un message de statut de point d'accès, un message de configuration de point d'accès, un message de statut de commutateur, un message de configuration de commutateur, un message de statut de client et un message de découverte de dispositif.

14. Stockage lisible par une machine, ayant, stocké sur celui-ci, un programme informatique ayant au moins une section de code destinée à être exécutée sur un système informatique pour mettre en oeuvre le procédé selon les revendications 1 à 13.

15. Système de fourniture de gestion de réseau pour un réseau local hybride filaire/sans fil comprenant un premier domaine (214) de réseau avec un premier commutateur (202, 222, 306, 308, 402) couplé à un premier point d'accès (204, 208, 210, 214, 224, 226, 228, 230, 232, 310, 312, 314, 316, 318, 320), et un deuxième domaine (234) de réseau avec un deuxième commutateur (202, 222, 306, 308, 402) couplé à un deuxième point d'accès (204, 208, 210, 214, 224, 226, 228, 230, 232, 310, 312, 314, 316, 318, 320), dans lequel :
le deuxième commutateur est adapté à recevoir d'au moins un parmi le premier point d'accès et le premier commutateur, un premier message du protocole de messagerie contenant une information de qualité de service, QoS ;
le deuxième commutateur est adapté à déterminer au moins un niveau minimum de QoS sur la base de niveaux acceptables de latence et de disponibilité de largeur de bande pour un fonctionnement dudit premier commutateur, dudit premier point d'accès, dudit deuxième point d'accès, et dudit deuxième commutateur en réponse audit premier message du protocole de messagerie ;
le deuxième commutateur est adapté à distribuer une information de QoS correspondant audit niveau minimum de QoS déterminé à au moins le premier commutateur en utilisant un deuxième message du protocole de messagerie ;
au moins un commutateur est adapté à établir des règles devant être utilisées par au moins un des points d'accès lors de l'exécution d'activités de gestion de QoS afin de maintenir ledit niveau minimum de QoS déterminé ;
au moins un commutateur est adapté à propager lesdites règles de l'au moins un commutateur audit au moins un des points d'accès en utilisant ledit protocole de messagerie ; et
le deuxième commutateur est adapté à forcer un dispositif d'accès (322, 324, 326, 328, 330, 332, 334, 336, 338) à rejoindre en itinérance le premier domaine de réseau sur la base de ladite information de QoS distribuée.
